# EUROPEAN PATENT SPECIFICATION

(11) **EP 2 007 156 B1**
(45) Date of publication and mention of the grant of the patent: **17.09.2014**
(21) Application number: 07715262.7
(22) Date of filing: 28.02.2007
(51) Int. Cl.: H04W 92/22, H04W 88/12

(54) **Radio control device and its operation control method**
Funksteuereinrichtung und Betriebssteuerverfahren dafür
Dispositif de commande radio et procédé de commande de fonctionnement de ce dernier

(30) Priority: 08.03.2006 JP 2006061987
(43) Date of publication of application: 24.12.2008
(73) Proprietor: NEC Corporation, Minato-ku Tokyo 108-8001 (JP)
(72) Inventor: NOMA, Satoshi, Tokyo 108-8001 (JP)
(74) Representative: Splanemann
(86) International application number: PCT/JP2007/054371
(87) International publication number: WO 2007/102524

(56) References cited:
- EP-A1- 1 377 089
- EP-A2- 1 435 741
- JP-A- 2002 199 440
- JP-A- 2006 279 630
- 'UTRAN lur interface general aspects and principles' 3GPP TS25.420 V6.4.0, [Online] June 2005, pages 16 - 17, 21 - 22, XP003017695 Retrieved from the Internet: <URL:http://www.3gpp.org/ftp/Specs/archiver /25_series/25.420/25420-640.zip>

## Description

### Technical Field:

The present invention relates to a radio network controller and an operation control method thereof, and more particularly to a radio network controller capable of separating a C-plane and a T-plane from each other and an operation control method thereof.

### Background Art:

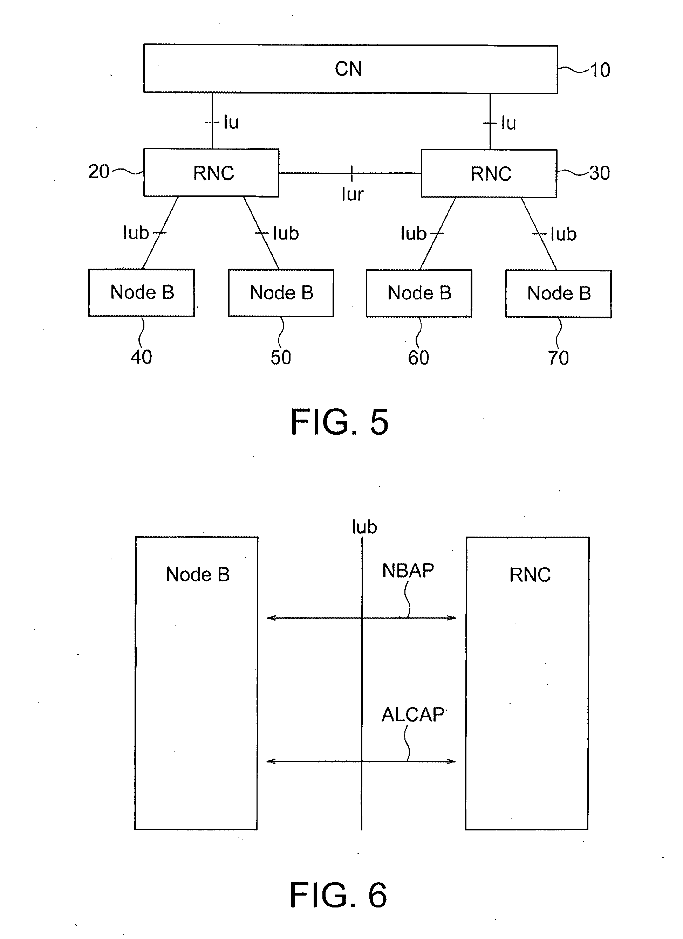

FIG. 5 shows architecture of a W-CDMA type mobile communication system. Referring to FIG. 5, this system includes a CN (core network) 10, RNCs (Radio Network Controllers) 20 and 30, and Node Bs (wireless base stations) 40, 50, 60, and 70. The RNCs 20 and 30 are connected to the CN 10 via lu interfaces and connected to the Node Bs 40, 50, 60, and 70 via lub interfaces. Furthermore, the RNCs 20 and 30 are connected to each other via an lur interface.

The details of the architecture as shown in FIG. 5 are defined by 3GPP (3rd Generation Partnership Project), are well-known, and are also disclosed by Japanese laid-open patent publications Nos. 2002-199440, 2003-283596, and 2004-007084.

In such a mobile communication system, in order that an unillustrated mobile terminal transmits information to and receives information from a network including the CN 10 via the Node Bs, it is necessary to ensure a transmission line resource in each interface of lub, lur, and lu as needed. When ATM lines are used as those transmission lines, a transmission line control protocol for a transport layer that is referred to as an ALCAP (Access Link Control Application Part) protocol is used between the RNCs 20 and 30 and the Node Bs 40, 50, 60, and 70 to ensure transmission line resources.

Additionally, it is necessary to negotiate radio resources between the Node Bs and the RNCs. For that purpose, a radio control protocol that is referred to as an NBAP (Node B Application Part) protocol is used to ensure radio resources. FIG. 6 schematically shows the relationship of the aforementioned ALCAP protocol and NBAP protocol in an interface lub between an RNC and a Node B.

Simultaneously, identifiers referred to as Binding IDs used in the ALCAP are exchanged between the RNC and the Node B. The Binding ID is an identifier used to show a Node B that both of NBAP and ALCAP messages relate to a specific call when the NBAP message and the ALCAP message are transmitted to the Node B. The details of the Binding ID, the ALCAP and NBAP protocols, and the ALCAP and NBAP messages are defined by the aforementioned 3GPP.

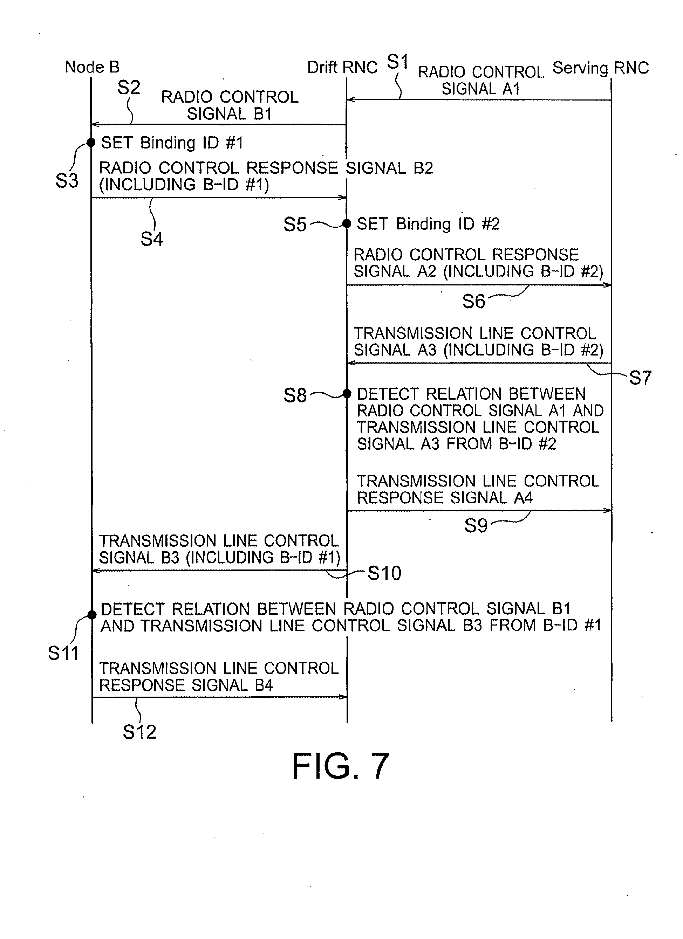

FIG. 7 is a schematic sequence diagram showing operation in a case where an unillustrated UE (User Equipment) shifts from a Serving RNC to a Drift RNC in a handover process, the details of which are defined by the aforementioned 3GPP. Referring to FIG. 7, the Serving RNC transmits a radio control signal A1 to the Drift RNC (Step S1). Based on this signal, the Drift RNC transmits a radio control signal B1 to a Node B (Step S2).

The Node B produces an identifier of Binding ID #1 (Step S3) and transmits a radio control response signal B2 including that identifier to the Drift RNC (Step S4). The Drift RNC produces an identifier of Binding ID #2 (Step S5) and transmits a radio control response signal A2 including that identifier to the Serving RNC (Step S6).

The Serving RNC transmits a transmission line control signal A3 including Binding ID #2 to the Drift RNC (Step S7). The Drift RNC detects from Binding ID #2 that the radio control signal A1 previously received relates to the transmission line control signal A3 (Step S8). The Drift RNC transmits a transmission line control response signal A4 to the Serving RNC (Step S9). The Drift RNC transmits a transmission line control signal B3 including Binding ID #1 to the Node B (Step S10).

The Node B detects from Binding ID #1 that the radio control signal B1 previously received relates to the transmission line control signal B3 (Step S11). The Node B transmits a transmission line control response signal B4 to the Drift RNC (Step S12).

### Disclosure of Invention:

### Problem(s) to be Solved by the Invention

In terms of function, the RNC can roughly be classified into three planes including a U-plane (User-Plane), a C-plane (Control-Plane), and a T-plane (Transport-Plane). The U-plane is a functional part for transfer of user information, the C-plane is a functional part for transfer control of radio control signals, and the T-plane is a functional part for transmission line control.

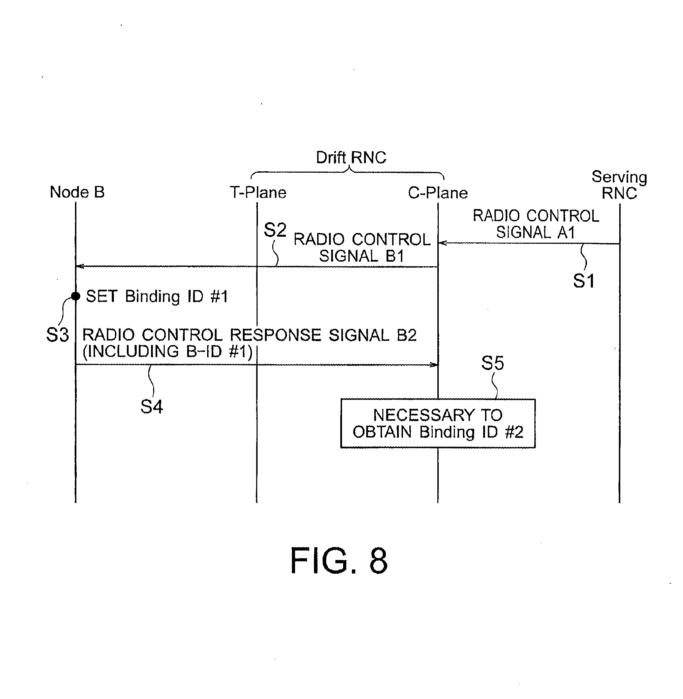

Here, the technology to physically separate the U-plane and the C-plane from each other to ensure the scalability of a system has been proposed by Japanese laid-open patent publications Nos. 2004-032333, 2004-194064, 2004-247823, and 2005-252502. Thus, it can be considered to physically separate the T-plane as well. In such a case, the following problems arise between the T-plane and the C-plane. Those problems will be described with reference to FIG. 8. FIG. 8 shows a case where the Drift RNC is an RNC in which a C-Plane and a T-Plane are separated from each other. In FIG. 8, steps equivalent to those in FIG. 7 are denoted by the same reference numerals.

The C-plane transmits and receives radio control signals, and the T-plane transmits and receives transmission line control signals. When the Drift RNC receives a radio control signal A1 from the Serving RNC (Step S1), it transmits a radio control signal B1 to the Node B (Step S2). A radio control signal B2 including Binding ID #1 (obtained in Step S3) is received from the Node B by the C-plane (Step S4).

After that, it is necessary to transmit a radio control signal A2 including Binding ID #2 to the Serving RNC (see Step S6 in FIG. 7). Therefore, the Drift RNC should set this Binding ID #2 (see Step S5). In this case, this Binding ID #2 should be an identifier common to the C-plane and the T-plane. Thus, it is necessary to provide a function of obtaining Binding ID #2 common to the C-plane and the T-plane, which are physically separated from each other.

Then a series of processes beginning from receipt of a transmission line control signal A3 from the Serving RNC (Step S7 in FIG. 7) are completed when the Drift RNC receives a transmission line control response signal B4 from the Node B (Step S12 in FIG. 7). In the Drift RNC, however, the transmission line control response signal B4 is received by the T-plane. Therefore, the C-plane cannot detect the completion and cannot thus determine whether the processes have been completed normally or abnormally.

It is an object of the present invention to provide a Drift RNC (radio network controller) capable of physically separating a C-plane and a T-plane from each other by defining a new signal between the C-plane and the T-plane, an operation control method thereof, and a program thereof.

### Means to Solve the Problem

A radio network controller according to the present invention is a radio network controller in a mobile communication system and is characterized by including means for transmitting and receiving an acquisition request signal for a binding ID, which is indicative of relation between a radio control signal and a transmission line control signal, and a response signal to the acquisition request signal between a C-plane for terminating the radio control signal and a T-plane for terminating the transmission line control signal. The radio network controller is characterized in that the means further transmits and receives a signal indicative of transmission line control success between the C-plane and the T-plane.

An operation control method for a radio network controller according to the present invention is an operation control method for a radio network controller in a mobile communication system and is characterized by including a step of transmitting and receiving an acquisition request signal for a binding ID, which is indicative of relation between a radio control signal and a transmission line control signal, and a response signal to the acquisition request signal between a C-plane for terminating the radio control signal and a T-plane for terminating the transmission line control signal. The operation control method is characterized by further including a step of transmitting and receiving a signal indicative of transmission line control success between the C-plane and the T-plane.

A program according to the present invention is a program for executing an operation control method for a radio network controller with a computer and is characterized by including a process of transmitting and receiving an acquisition request signal for a binding ID, which is indicative of relation between a radio control signal and a transmission line control signal, and a response signal to the acquisition request signal between a C-plane for terminating the radio control signal and a T-plane for terminating the transmission line control signal. The program is characterized by further including a process of transmitting and receiving a signal indicative of transmission line control success between the C-plane and the T-plane.

Operation of the present invention will be described. New control signals are defined and introduced between a C-plane and a T-plane in a Drift RNC. The new signals are Binding ID acquisition request/response signals and a transmission line control success notification signal. Thus, signals are newly provided between a C-plane and a T-plane for the purpose of acquiring a Binding ID. Therefore, a Binding ID can be acquired without sending a transmission line signal. Furthermore, a signal is newly provided for a T-plane to notify a C-plane of completion of transmission line control between a Node B, a Drift RNC, and a Serving RNC. Therefore, the C-plane can recognize the completion of the related process. As a result, the Drift RNC can operate without contradiction even though the C-plane and the T-plane are physically separated from each other.

### Effect(s) of the Invention:

A first effect of the present invention is that a Binding ID can be acquired without sending a transmission line signal because signals are newly provided between a C-plane and a T-plane for the purpose of acquiring a Binding ID.

A second effect of the present invention is that the C-plane can recognize the completion of the related process because a signal is newly provided for the T-plane to notify the C-plane of completion of transmission line control between a Node B, a Drift RNC, and a Serving RNC.

A third effect of the present invention is that the Drift RNC can operate without contradiction even though the C-plane and the T-plane are physically separated from each other because processes for the new signals between the C-plane and the T-plane are combined with the existing signal processes.

### Brief Description of Drawings:

FIG. 1 is a schematic view of a system to which an example of the present invention is applied.
FIG. 2 is a functional block diagram of a Drift RNC in an example of the present invention.
FIG. 3 is a sequence diagram showing operation in an embodiment of the present invention.
FIG. 4 is a sequence diagram showing operation in another embodiment of the present invention.
FIG. 5 is a diagram showing architecture of a W-CDMA type mobile communication system.
FIG. 6 is a diagram showing the relationship of protocols in an interface lub between an RNC and Node B shown in FIG. 5.
FIG. 7 is a sequence diagram of operation in a Serving RNC, a Drift RNC, and a Node B in the prior art.
FIG. 8 is a sequence diagram of operation in a case where a Drift RNC is separated into a C-plane and a T-plane.

### Best Mode for Carrying Out the Invention:

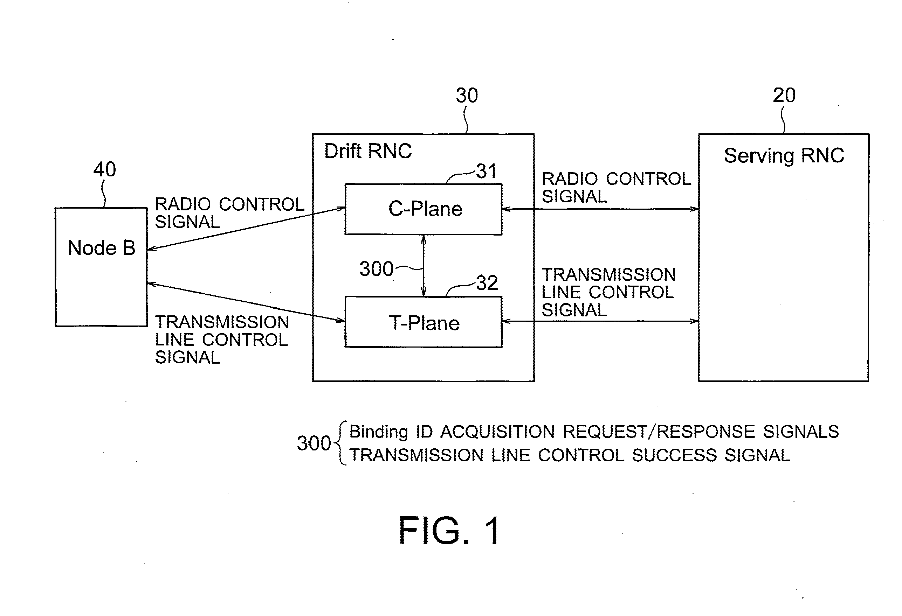

Embodiments of the present invention will be described below with reference to the drawings. FIG. 1 is a schematic view of a system for explanation of the principle of the present invention. Referring to FIG. 1, there are provided a Serving RNC 20, a Drift RNC 30, and a Node B 40. The Serving RNC 20 has a function of terminating a radio control signal and a transmission line control signal between the Serving RNC 20 and the Drift RNC 30.

The Drift RNC 30 has a C-plane 31 and a T-plane 32, which can physically be separated from each other. The C-plane 31 has a function of terminating a radio control signal between the Node B 40 and the Serving RNC 20. The T-plane 32 has a function of terminating a transmission line control signal between the Node B 40 and the Serving RNC 20. Then new signals 300 are defined between the C-plane 31 and the T-plane 32. The signals 300 include Binding ID acquisition request/response signals and a transmission line control success signal.

The C-plane and the T-plane terminate Binding ID acquisition request/response signals and a transmission line control success signal, ant the Node B 40 terminates a radio control signal and a transmission line control signal between the Node B 40 and the Drift RNC 30.

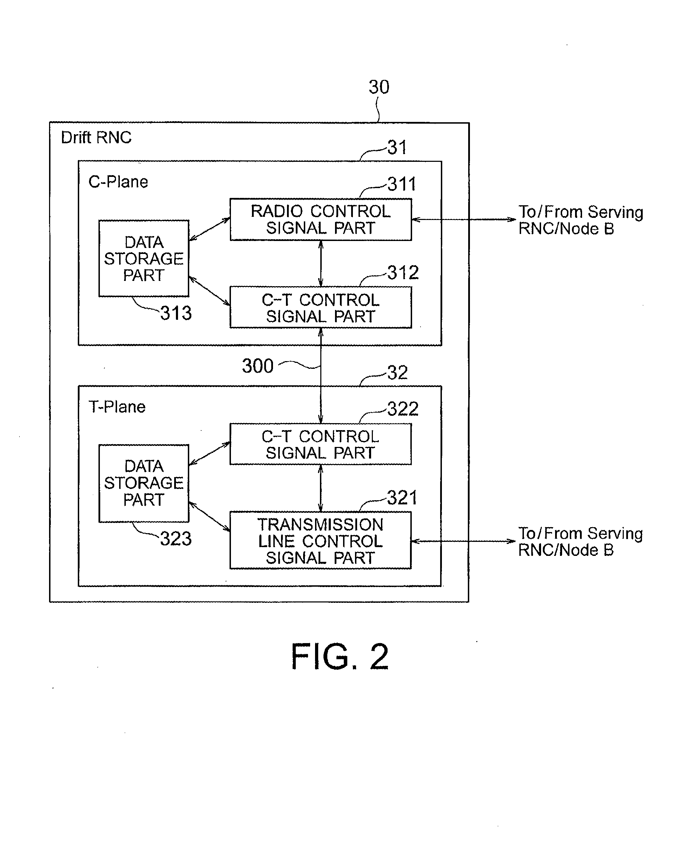

FIG. 2 shows a configuration of the Drift RNC 30 as an embodiment of the present invention. In FIG. 2, the Drift RNC 30 includes a C-plane 31 and a T-plane 32. The C-plane includes a radio control signal part 311, a C-T control signal part 312, and a data storage part 313. The radio control signal part 311 transmits a radio control signal to and receives a radio control signal from the Node B 40 and the Serving RNC 20. The C-T control signal part 312 transmits and receives a control signal between the C-plane and the T-plane.

The control signals 300 between the C-plane and the T-plane include Binding ID acquisition request/response signals and a transmission line control success notification signal. The data storage part 313 writes and reads data necessary for operation of the radio control signal part 311 and the C-T control signal part 312.

The T-plane 32 includes a transmission line control signal part 321, a C-T control signal part 322, and a data storage part 323. The transmission line control signal part 321 transmits a transmission line control signal to and receives a transmission line control signal from the Node B 40 and the Serving RNC 20. The C-T control signal part 322 transmits and receives a control signal between the C-plane and the T-plane. The data storage part 323 writes and reads data necessary for operation of the transmission line control signal part 321 and the C-T control signal part 322.

Although the configuration in the embodiment has been described in detail, the radio control signal part and the transmission line control signal part in FIG. 2 are well-known to persons having ordinary skill in the art and do not directly relate to the present invention. Therefore, the detailed configurations of those parts are omitted.

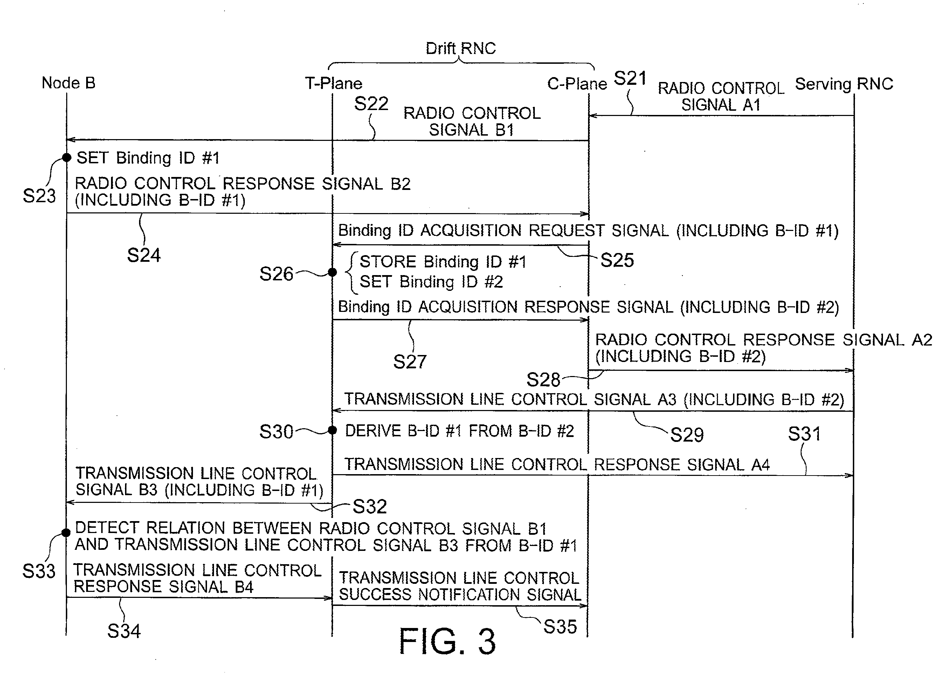

FIG. 3 is a sequence diagram showing operation of the embodiment of the present invention. In FIG. 3, when a radio control signal A1 is supplied from the Serving RNC 20 to the C-plane 31 of the Drift RNC 30 (Step S21), the C-plane 31 performs a conversion process on the radio control signal A1 and supplies a radio control signal B1 to the Node B 40 (Step S22).

The Node B 40 obtains Binding ID #1 within the Node B 40 (Step S23) and supplies a radio control response signal B2 including Binding ID #1 to the C-plane 31 (Step S24). When the C-plane 31 receives the radio control response signal B2, it supplies a Binding ID acquisition request signal including Binding ID #1 to the T-plane 32 (Step S25). The T-plane 32 obtains Binding ID #2 within the T-plane 32 and stores Binding ID #1 and Binding ID #2 in association with each other (Step S26).

The T-plane 32 supplies a Binding ID acquisition response signal including Binding ID #2 to the C-plane 31 (Step S27). When the C-plane 31 receives the Binding ID acquisition response signal, it supplies a radio control response signal A2 including Binding ID #2 to the Serving RNC 20 (Step S28). The Serving RNC 20 supplies a transmission line control signal A3 including Binding ID #2 to the T-plane 32 (Step S29). When the T-plane 32 obtains Binding ID #2, it calls the associated Binding ID #1 (Step S30). The T-plane 32 supplies a transmission line control response signal A4 to the Serving RNC 20 (Step S31).

The T-plane 32 supplies a transmission line control signal B3 including Binding ID #1 to the Node B 40 (Step S32). When the Node B 40 obtains Binding ID #1, it detects that the transmission line control signal B3 relates to the radio control signal B1 (Step S33). The Node B 40 supplies a transmission line control response signal B4 to the T-plane 32 (Step S34). When the T-plane 32 receives the transmission line control response signal B4, it supplies a transmission line control success notification signal to the C-plane 31 (Step S35).

With the above method, the T-plane 32 can acquire a Binding ID without sending a transmission line signal and can acquire a Binding ID common to the T-plane and the C-plane. Furthermore, the C-plane 31 can recognize that the related process has been completed.

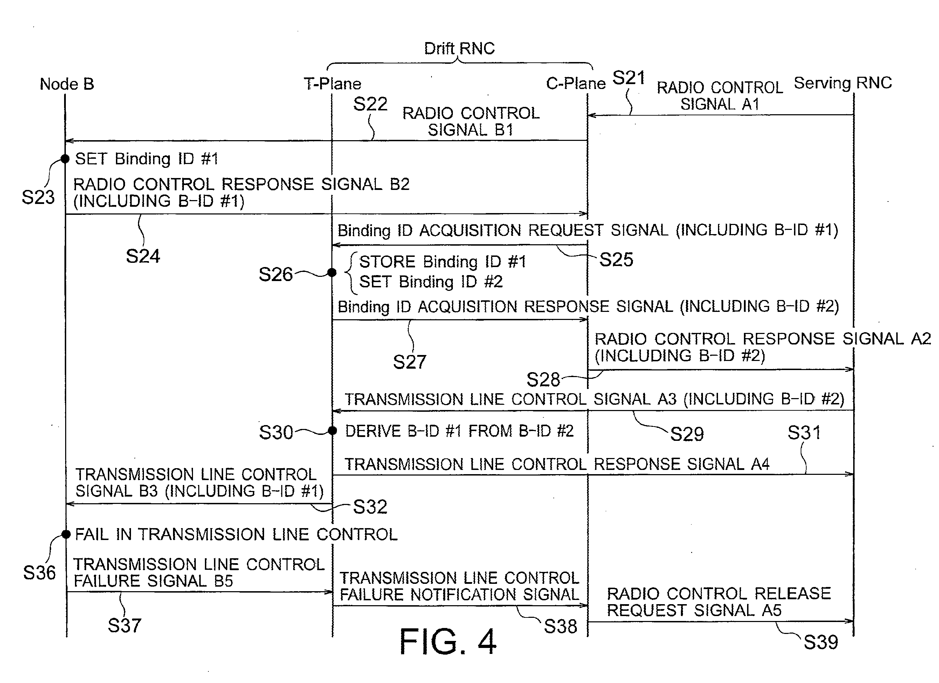

Next, operation in another embodiment of the present invention will be described below with reference to FIG. 4. In this example, although the basic configuration is the same as in the foregoing embodiment, some considerations have been given in operation for a fault process. In FIG. 4, steps equivalent to those in FIG. 3 are denoted by the same reference numerals.

In FIG. 4, Steps S21 to S32 are the same as Steps S21 to S32 in the embodiment of FIG. 3 and are thus omitted from the following explanation. In the next Step S36, if the Node B 40 fails in the transmission line control, the Node B 40 supplies a transmission line control failure signal B5 to the T-plane 32 (Step S37). When the T-plane 32 receives the transmission line control failure signal B5, it supplies a transmission line control failure notification signal to the C-plane 31 (Step S38). The C-plane 31 supplies a radio control release request signal A5 to the Serving RNC 20 (Step S39).

With the above method, the Serving RNC 20 can detect failure in the association process of the radio control and the transmission line control. Thus, in this example, since the T-plane 32 notifies the C-plane 31 of failure of transmission line control, operation can be performed without any contradiction even in a fault process.

It is apparent that the operation in each of the aforementioned embodiments can be configured such that the operational procedures are prestored as a program in a storage medium such as ROM and read and executed by a computer.

## Claims

1. A radio network controller in a mobile communication system, **characterized by** including means for transmitting and receiving an acquisition request signal for a binding ID, identifier, which is indicative of relation between a radio control signal and a transmission line control signal, and a response signal to the acquisition request signal between a C-plane for terminating the radio control signal and a T-plane for terminating the transmission line control signal.

2. The radio network controller as recited in claim 1, **characterized in that** the means further transmits and receives a signal indicative of success or failure of transmission line control between the C-plane and the T-plane.

3. The radio network controller as recited in claim 1, **characterized in that** the C-plane and the T-plane are physically separated from each other.

4. An operation control method for a radio network controller in a mobile communication system, **characterized by** including a step of transmitting and receiving an acquisition request signal for a binding ID, identifier, which is indicative of relation between a radio control signal and a transmission line control signal, and a response signal to the acquisition request signal between a C-plane for terminating the radio control signal and a T-plane for terminating the transmission line control signal.

5. The operation control method as recited in claim 4, **characterized by** further including a step of transmitting and receiving a signal indicative of success or failure of transmission line control between the C-plane and the T-plane.

6. The operation control method as recited in claim 4, **characterized in that** the C-plane and the T-plane are physically separated from each other.

7. A program for executing an operation control method for a radio network controller with a computer, **characterized by** including a process of transmitting and receiving an acquisition request signal for a binding ID, identifier, which is indicative of relation between a radio control signal and a transmission line control signal, and a response signal to the acquisition request signal between a C-plane for terminating the radio control signal and a T-plane for terminating the transmission line control signal.

8. The program as recited in claim 7, **characterized by** further including a process of transmitting and receiving a signal indicative of success or failure of transmission line control between the C-plane and the T-plane.

## Patentansprüche

1. Funknetzwerk-Steuergerät in einem mobilen Kommunikationssystem, **dadurch gekennzeichnet, dass** es eine Einrichtung für das Senden und Empfangen eines Anfragesignals zur Beschaffung einer Bindungs-ID, Kennung, welche die Beziehung zwischen einem Funksteuersignal und einen Übertragungsleitungs-Steuersignal anzeigt, einschließt, sowie ein Antwortsignal auf das Beschaffungsanfrage-Signal zwischen einer C-Ebene zum Beenden des des Funksteuersignals und einer T-Ebene zum Beenden des Übertragungsleitungs-Steuersignals einschließt.

2. Funknetzwerk-Steuergerät nach Anspruch 1, **dadurch gekennzeichnet, dass** die Einrichtung des Weiteren ein Signal überträgt und empfängt, welches einen Erfolg oder ein Versagen der Übertragungsleitungssteuerung zwischen der C-Ebene und der T-Ebene anzeigt.

3. Funknetzwerk-Steuergerät nach Anspruch 1, **dadurch gekennzeichnet, dass** die C-Ebene und die T-Ebene räumlich voneinander getrennt sind.

4. Betriebssteuerungsverfahren für ein Funknetzwerk-Steuergerät in einem mobilen Kommunikationssystem, **dadurch gekennzeichnet, dass** es einen Schritt der Übertragung und des Empfangs eines Anfragesignals für die Beschaffung einer Bindungs-ID, Kennung, welche die Beziehung zwischen einem Funksteuersignal und einem Übertragungsleitungs-Steuersignal anzeigt, einschließt, sowie ein Anwortsignal auf das Beschaffungsanfrage-Signal zwischen einer C-Ebene zum Beenden des Funksteuersignals und einer T-Ebene zum Beenden des Übertragungsleitungs-Steuersignals einschließt.

5. Betriebssteuerungsverfahren nach Anspruch 4, **dadurch gekennzeichnet, dass** es des Weiteren einen Schritt der Übertragung und des Empfangs eines Signals einschließt, welches einen Erfolg oder ein Versagen der Übertragungsleitungssteuerung zwischen der C-Ebene und der T-Ebene anzeigt.

6. Betriebssteuerungsverfahren nach Anspruch 4, **dadurch gekennzeichnet, dass** die C-Ebene und die T-Ebene räumlich voneinander getrennt sind.

7. Programm zur Ausführung eines Betriebssteuerungsverfahrens für ein Funknetzwerksteuergerät mit einem Computer, **dadurch gekennzeichnet, dass** es einen Vorgang der Übertragung und des Empfangs eines Anfragesignals zur Beschaffung einer Bindungs-ID, Kennung, welche die Beziehung zwischen einem Funksteuerungssignal und einem Übertragungsleitungs-Steuersignal anzeigt, einschließt, sowie ein Antwortsignal auf das Beschaffungsanfrage-Signal zwischen einer C-Ebene zum Beenden des Funksteuersignals und einer T-Ebene zum Beenden des Übertragungsleitungs-Steuersignals einschließt.

8. Programm nach Anspruch 7, **dadurch gekennzeichnet, dass** es des Weiteren einen Vorgang der Übertragung und des Empfangs eines Signals einschließt, welches einen Erfolg oder ein Versagen der Übertragungsleitungssteuerung zwischen der C-Ebene und der T-Ebene anzeigt.

## Revendications

1. Contrôleur de réseau radio d'un système de communication mobile, **caractérisé par** le fait de comprendre un moyen pour transmettre et recevoir un signal de demande d'acquisition pour un ID (identifiant) de liaison, qui indique une relation entre un signal de commande radio et un signal de commande de ligne de transmission et un signal de réponse au signal de demande d'acquisition entre un C-plane pour interrompre le signal de commande radio et un T-plane pour interrompre le signal de commande de ligne de transmission.

2. Le contrôleur de réseau radio selon la revendication 1, **caractérisé en ce que** le moyen transmet et reçoit en outre un signal indicatif du succès ou de l'échec du contrôle de ligne de transmission entre le C-plane et le T-plane.

3. Le contrôleur de réseau radio selon la revendication 1, **caractérisé en ce que** le C-plane et le T-plarte sont physiquement séparés l'un de l'autre.

4. Une méthode de contrôle de fonctionnement pour un contrôleur de réseau radio dans un système de communication mobile, **caractérisé par** le fait de comprendre une étape de transmettre et recevoir un signal de demande d'acquisition pour un ID [identifiant) de liaison, qui indique une relation entre un signal de commande radio et un signal de commande de ligne de transmission et
un signal de réponse au signal de demande d'acquisition entre un C-plane pour interrompre le signal de commande radio et un T-plane pour interrompre le signal de commande de ligne de transmission.

5. La méthode de contrôle de fonctionnement selon la revendication 4, **caractérisé en ce que** qu'elle comprend une étape de transmettre et recevoir un signal indicatif de succès ou l'échec du contrôle de ligne de transmission entre le C-plane et le T-plane.

6. La méthode de contrôle de fonctionnement selon dans la revendication 4, **caractérisé. En ce que** le C-plane et le T-plane sont physiquement séparés l'un de l'autre.

7. Un programme pour l'exécution d'une méthode de contrôle de l'opération d'un contrôleur de réseau radio avec un ordinateur, **caractérisé par** le fait de comprendre un procédé d'émission et de réception d'un signal de demande d'acquisition pour un ID (identifiant) de liaison, qui indique une relation entre un signal de commande radio et un signal de commande de ligne de transmission et un signal de réponse au signal de demande d'acquisition entre un C-plane pour interrompre le signal de commande radio et un T-plane pour interrompre le signal de commande de ligne de transmission.

8. Le programme selon dans la revendication 7, **caractérisé par** le fait de comprendre en outre un procédé d'émission et de réception d'un signal qui indique le succès ou l'échec du contrôle de la ligne de transmission entre le C-plane et le T-plane.
